# EUROPEAN PATENT APPLICATION

(11) **EP 3 357 723 A1**
(43) Date of publication of application: **08.08.2018**
(21) Application number: 16851274.7
(22) Date of filing: 20.09.2016
(51) Int. Cl.: B60G 17/056, B60G 17/015, F16F 9/46

(54) **SUSPENSION DEVICE**

(30) Priority: 30.09.2015 JP 2015193145
(71) Applicant: KYB Corporation, Tokyo 105-6111 (JP)
(72) Inventor: MASAMURA, Tatsuya, Tokyo 105-6111 (JP)
(74) Representative: Grünecker Patent- und Rechtsanwälte PartG mbB
(86) International application number: PCT/JP2016/077708
(87) International publication number: WO 2017/057100

(57) **Abstract**

A suspension device (S) includes a fluid pressure circuit (FC) disposed between a damper (D), a pump (4), and a reservoir (R). The fluid pressure circuit (FC) includes an extension-side damping valve (15) disposed in an extension-side passage (7), a contraction-side damping valve (17) disposed in a contraction-side passage (8), and a suction passage (10) that connects a discharge passage (6) to a supply passage (5) at a point between an electromagnetic throttle switching valve (9) and a supply-side check valve (12). The suspension device (S) further includes a control unit (C) configured to control the electromagnetic throttle switching valve (9) on a basis of a differential pressure between the extension-side passage (7) and the contraction-side passage (8).

## Description

### TECHNICAL FIELD

The present invention relates to a suspension device.

### BACKGROUND ART

Some suspension devices, for example, function as active suspensions interposed between a vehicle body and an axle of a vehicle. Specifically, the suspension device includes a damper that includes a cylinder and a piston, which is movably inserted into the cylinder to partition an inside of the cylinder into an extension-side chamber and a contraction-side chamber, a pump, a reservoir, an electromagnetic switching valve, which selectively connects the extension-side chamber and the contraction-side chamber to the pump and the reservoir, and an electromagnetic pressure control valve, which can adjust a pressure of a chamber connected to the pump among the extension-side chamber and the contraction-side chamber according to a supplied current (for example, see JP2016-88358A).

This suspension device can select a direction that the damper produces a thrust by switching the electromagnetic switching valve and control a magnitude of the thrust by adjusting a pressure of the electromagnetic pressure control valve.

### SUMMARY OF INVENTION

As described above, this suspension device requires two solenoid valves with solenoids to control the thrust of the damper. This causes problems of an increase in cost of the entire device and complicated routing of pipes of a fluid pressure circuit.

An object of the present invention is to provide a suspension device that ensures simplifying routing of pipes inexpensively.

A suspension device according to one aspect of the present invention includes a damper, a pump, a reservoir, and a fluid pressure circuit. The damper includes a cylinder and a piston. The piston is movably inserted into the cylinder to partition the inside of the cylinder into an extension-side chamber and a contraction-side chamber. The reservoir is connected to a suction side of the pump. The fluid pressure circuit is disposed between the damper, the pump, and the reservoir. The fluid pressure circuit includes a supply passage, a discharge passage, an extension-side passage, a contraction-side passage, an extension-side damping valve, a contraction-side damping valve, an electromagnetic throttle switching valve, a supply-side check valve, a suction passage, and a suction check valve. The supply passage is connected to a discharge side of the pump. The discharge passage is connected to the reservoir. The extension-side passage is connected to the extension-side chamber. The contraction-side passage is connected to the contraction-side chamber. The extension-side damping valve is disposed in the extension-side passage. The contraction-side damping valve is disposed in the contraction-side passage. The electromagnetic throttle switching valve is disposed between the supply passage, the discharge passage, the extension-side passage, and the contraction-side passage. The supply-side check valve is disposed between the electromagnetic throttle switching valve and the pump in the supply passage. The supply-side check valve is configured to allow only a flow heading for the electromagnetic throttle switching valve side from the pump side. The suction passage connects the discharge passage to the supply passage at between the electromagnetic throttle switching valve and the supply-side check valve . The suction check valve is disposed in the suction passage. The suction check valve is configured to allow only a flow of fluid heading for the supply passage from the discharge passage. The suspension device further includes a control unit. The control unit is configured to control the electromagnetic throttle switching valve on a basis of a differential pressure between the extension-side passage and the contraction-side passage.

### BRIEF DESCRIPTION OF DRAWINGS

FIG. 1 is a drawing illustrating a suspension device according to a first embodiment.
FIG. 2 is a drawing where the suspension device according to the first embodiment is interposed between a vehicle body and a wheel of a vehicle.
FIG. 3 is a structural drawing of an electromagnetic throttle switching valve in the suspension device according to the first embodiment.
FIG. 4 is a drawing illustrating a relationship between an amount of current supplied to the electromagnetic throttle switching valve and a differential pressure in the suspension device according to the first embodiment.
FIG. 5 is a drawing illustrating properties of a thrust when the suspension device according to the first embodiment is caused to function as an active suspension.
FIG. 6 is a drawing illustrating properties of a thrust when the suspension device according to the first embodiment is caused to function as a semi-active suspension.
FIG. 7 is a drawing illustrating properties of a thrust while the suspension device according to the first embodiment is in failure.
FIG. 8 is a drawing illustrating a suspension device according to a second embodiment.
FIG. 9 is a drawing illustrating a suspension device according to a third embodiment.

### DESCRIPTION OF EMBODIMENTS

The following describes a suspension device S according to embodiments of the present invention with reference to the drawings.

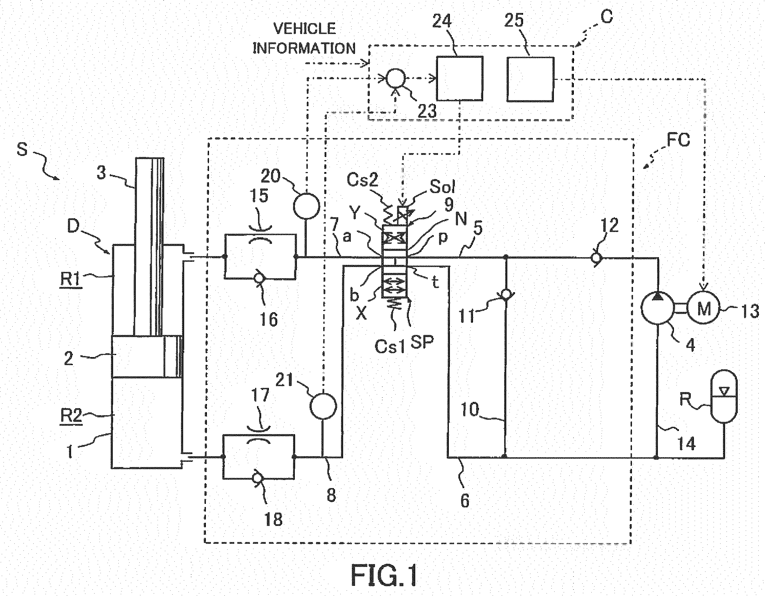

As illustrated in FIG. 1, the suspension device S according to a first embodiment includes a damper D, which includes a cylinder 1 and a piston 2, a pump 4, a reservoir R, which is connected to a suction side of the pump 4, a fluid pressure circuit FC, which is disposed between the damper D, the pump 4, and the reservoir R, and a control unit C, which controls an electromagnetic throttle switching valve 9 in the fluid pressure circuit FC. The piston 2 is movably inserted into the cylinder 1 to partition the inside of the cylinder 1 into an extension-side chamber R1 and a contraction-side chamber R2.

The fluid pressure circuit FC includes a supply passage 5 connected to a discharge side of the pump 4, a discharge passage 6 connected to the reservoir R, an extension-side passage 7 connected to the extension-side chamber R1, a contraction-side passage 8 connected to the contraction-side chamber R2, an extension-side damping valve 15 disposed in the extension-side passage 7, a contraction-side damping valve 17 disposed in the contraction-side passage 8, the electromagnetic throttle switching valve 9 with four ports and three positions disposed between the supply passage 5, the discharge passage 6, the extension-side passage 7, and the contraction-side passage 8, a supply-side check valve 12, which is disposed between the electromagnetic throttle switching valve 9 and the pump 4 in the supply passage 5 and allows only a flow heading for the electromagnetic throttle switching valve 9 side from the pump 4 side, a suction passage 10, which connects between the electromagnetic throttle switching valve 9 and the supply-side check valve 12 in the supply passage 5 to the discharge passage 6, and a suction check valve 11, which is disposed in the suction passage 10 and allows only a flow of fluid heading for the supply passage 5 from the discharge passage 6.

The damper D includes a rod 3 movably inserted into the cylinder 1 and joined to the piston 2. In the suspension device S, the rod 3 is inserted through only to the inside of the extension-side chamber R1, and the damper D is a so-called a single-rod damper. It should be noted that the reservoir R is disposed independent from the damper D as illustrated in FIG. 1. Although not illustrated in detail, an outer pipe arranged at an outer peripheral side of the cylinder 1 in the damper D may be disposed, and the reservoir R may be formed of an annular clearance between the cylinder 1 and the outer pipe.

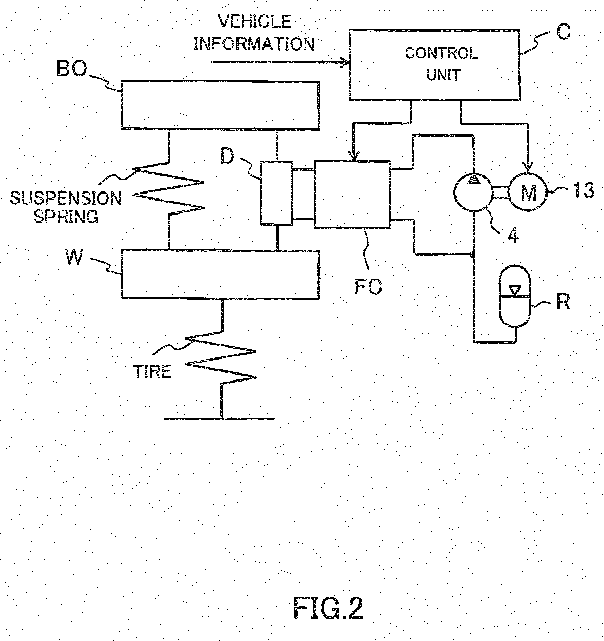

As illustrated in FIG. 2, to apply the suspension device S to a vehicle, it is only necessary that the cylinder 1 is joined to one of a sprung member BO and an unsprung member W of the vehicle, the rod 3 is joined to the other of the sprung member BO and the unsprung member W, and the suspension device S is interposed between the sprung member BO and the unsprung member W.

The extension-side chamber R1 and the contraction-side chamber R2 are filled with, for example, liquid such as hydraulic oil as fluid, and the inside of the reservoir R is filled with liquid and gas. As the liquid filling the insides of the extension-side chamber R1, the contraction-side chamber R2, and the reservoir R, liquid such as water and water solution is applicable in addition to the hydraulic oil. In this embodiment, a chamber to be compressed during an extension stroke is configured as the extension-side chamber R1 and a chamber to be compressed during a contraction stroke is configured as the contraction-side chamber R2.

The pump 4 is configured as a one-way discharge type that suctions fluid from a suction side and discharges the fluid from a discharge side. The pump 4 is driven by a motor 13. Regardless of a direct current and an alternate current, various kinds of motors, for example, a brushless motor, an induction motor, and a synchronous motor can be employed as the motor 13.

The suction side of the pump 4 is connected to the reservoir R with a pump passage 14, and the discharge side is connected to the supply passage 5. Accordingly, when driven by the motor 13, the pump 4 suctions the liquid from the reservoir R and discharges the liquid to the supply passage 5. As described above, the discharge passage 6 is communicated with the reservoir R.

The extension-side damping valve 15 and an extension-side check valve 16 are disposed in the extension-side passage 7. The extension-side damping valve 15 provides a resistance to the flow of liquid heading for the electromagnetic throttle switching valve 9 from the extension-side chamber R1. The extension-side check valve 16 is disposed in parallel with the extension-side damping valve 15 and allows only the flow of liquid heading for the extension-side chamber R1 from the electromagnetic throttle switching valve 9. Thus, the extension-side check valve 16 is maintained in the close state to the flow of liquid moving from the extension-side chamber R1 to the electromagnetic throttle switching valve 9; therefore, the liquid flows passing through only the extension-side damping valve 15 and flows to the electromagnetic throttle switching valve 9 side. In contrast to this, since the extension-side check valve 16 is opened to the flow of liquid moving from the electromagnetic throttle switching valve 9 to the extension-side chamber R1, the liquid passes through the extension-side damping valve 15 and the extension-side check valve 16 and flows heading for the extension-side chamber R1 side. Since the resistance provided to the flow of liquid at the extension-side check valve 16 is smaller than that of the extension-side damping valve 15, the liquid preferentially passes through the extension-side check valve 16 and flows heading for the extension-side chamber R1 side. The extension-side damping valve 15 may be a throttle valve allowing a bidirectional flow or may be a damping valve such as a leaf valve and a poppet valve that allows only the flow heading for the electromagnetic throttle switching valve 9 from the extension-side chamber R1.

The contraction-side damping valve 17 and a contraction-side check valve 18 are disposed in the contraction-side passage 8. The contraction-side damping valve 17 provides a resistance to the flow heading for the electromagnetic throttle switching valve 9 from the contraction-side chamber R2. The contraction-side check valve 18 is disposed in parallel with the contraction-side damping valve 17 and allows only the flow of liquid heading for the contraction-side chamber R2 from the electromagnetic throttle switching valve 9. Thus, the contraction-side check valve 18 is maintained in the close state to the flow of liquid moving from the contraction-side chamber R2 to the electromagnetic throttle switching valve 9; therefore, the liquid flows passing through only the contraction-side damping valve 17 and flows to the electromagnetic throttle switching valve 9 side. In contrast to this, since the contraction-side check valve 18 is opened to the flow of liquid moving from the electromagnetic throttle switching valve 9 to the contraction-side chamber R2, the liquid passes through the contraction-side damping valve 17 and the contraction-side check valve 18 and flows heading for the contraction-side chamber R2 side. Since the resistance provided to the flow of liquid at the contraction-side check valve 18 is smaller than that of the contraction-side damping valve 17, the liquid preferentially passes through the contraction-side check valve 18 and flows heading for the contraction-side chamber R2 side. The contraction-side damping valve 17 may be a throttle valve allowing a bidirectional flow or may be a damping valve such as a leaf valve and a poppet valve that allows only the flow heading for the electromagnetic throttle switching valve 9 from the contraction-side chamber R2.

The fluid pressure circuit FC further includes the suction passage 10 that connects the supply passage 5 to the discharge passage 6. The suction check valve 11 that allows only the flow of liquid heading for the supply passage 5 from the discharge passage 6 is disposed in the suction passage 10. Accordingly, the suction passage 10 is configured as a one-way passage that allows only the flow of liquid heading for the supply passage 5 from the discharge passage 6.

The supply-side check valve 12 is disposed between the electromagnetic throttle switching valve 9 and the pump 4 in the supply passage 5. In more detail, the supply-side check valve 12 is disposed on the pump 4 side with respect to a connecting point of the suction passage 10 in the supply passage 5. The supply-side check valve 12 allows only the flow heading for the electromagnetic throttle switching valve 9 side from the pump 4 side so as to block the opposite flow. Accordingly, even when the pressure on the electromagnetic throttle switching valve 9 side becomes higher than the discharge pressure of the pump 4, the supply-side check valve 12 is closed to block a backflow of the liquid to the pump 4 side.

The electromagnetic throttle switching valve 9 is configured as an electromagnetic throttle switching valve with four ports and three positions that includes four ports, an A-port ***a*** connected to the extension-side passage 7, a B-port ***b*** connected to the contraction-side passage 8, a P-port ***p*** connected to the supply passage 5, and a T-port ***t*** connected to the discharge passage 6 to control a differential pressure between the extension-side passage 7 and the contraction-side passage 8.

The electromagnetic throttle switching valve 9 is switched to an extension-side supply position X where the extension-side passage 7 communicates with the supply passage 5 and the contraction-side passage 8 communicates with the discharge passage 6, a neutral position N where all ports ***a*, *b*, *p,*** and ***t*** communicate with one another to mutually communicate between the supply passage 5, the discharge passage 6, the extension-side passage 7, and the contraction-side passage 8, and a contraction-side supply position Y where the extension-side passage 7 communicates with the discharge passage 6 and the contraction-side passage 8 communicates with the supply passage 5. The electromagnetic throttle switching valve 9 includes a pair of springs Cs1 and Cs2 and a push-pull solenoid Sol. A spool SP is sandwiched from both sides by the pair of springs Cs1 and Cs2 to be biased. The solenoid Sol drives the spool SP. When the spool SP does not receive a thrust from the solenoid Sol, the spool SP is positioned at the neutral position N by the biasing force from the springs Cs1 and Cs2. It should be noted that the extension-side supply position X, the neutral position N, and the contraction-side supply position Y are continuously switched by the movement of the spool SP. That is, the electromagnetic throttle switching valve 9 switches the mutual couplings between the respective ports ***a*, *b*, *p,*** and ***t*** and adjusts the flow rates (throttles) of the connected flow passages.

Current application to the solenoid Sol switches the spool SP to a position at which the thrust from the solenoid Sol and the biasing force from the springs Cs1 and Cs2 are balanced among the positions X and Y. The magnitude of the thrust of the solenoid Sol changes the position of the spool SP at which this thrust and the biasing force from the springs Cs1 and Cs2 are balanced. That is, adjusting the thrust of the solenoid Sol can control the differential pressure between the extension-side passage 7 and the contraction-side passage 8. The extension-side passage 7 is connected to the extension-side chamber R1 of the damper D and the contraction-side passage 8 is connected to the contraction-side chamber R2 of the damper D; therefore, the electromagnetic throttle switching valve 9 can control the differential pressure between the extension-side chamber R1 and the contraction-side chamber R2. Meanwhile, during non-current application during which the electric power is not supplied to the solenoid Sol, the spool SP is biased by the springs Cs1 and Cs2 and takes the neutral position N.

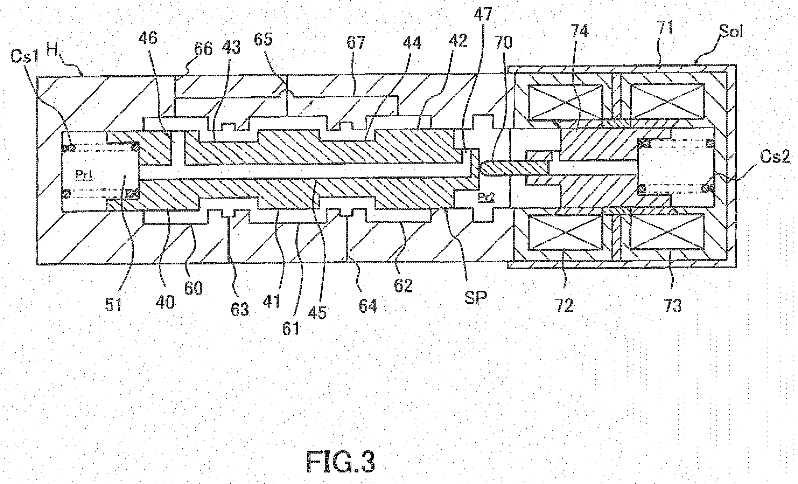

Next, the following describes the specific configuration of the electromagnetic throttle switching valve 9 with reference to FIG. 3.

The electromagnetic throttle switching valve 9 includes the spool SP, a housing H into which the spool SP is movably inserted in an axial direction, the springs Cs1 and Cs2 opposed to one another between which the spool SP is sandwiched from both end sides to be biased, and the push-pull solenoid Sol, which can produce the thrust of pressing the spool SP to both the right and left sides in FIG. 3.

The spool SP is formed in a cylindrical shape. The spool SP includes three lands 40, 41, and 42, which are axially arranged on the outer periphery, two grooves 43 and 44 disposed between the lands, a vertical hole 45, which opens to the center at the left end in FIG. 3 and axially extends, a horizontal hole 46, which radially extends from the vertical hole 45 and opens to the land 40 on the left side in FIG. 3, and a horizontal hole 47, which radially extends from the distal end of the vertical hole 45 and opens to an outer periphery at a distal end at the spool SP on the right side with respect to the land 42 in FIG. 3. The lands 40, 41, and 42 have outer diameters configured to be identical to one another.

The housing H is in the shape of a cylinder with a closed bottom, and the inner peripheral diameter is configured to be a diameter such that the inner peripheral surface can be slidably in contact with the outer peripheral surfaces of the lands 40, 41, and 42. The spool SP is slidably inserted into the housing H, and the spool SP can move and perform the stroke at the inside of the housing H in the right-left direction in FIG. 3, which is the axial direction. The insertion of the spool SP into the housing H forms chambers Pr1 and Pr2 at both sides of the spool SP inside the housing H. The chambers Pr1 and Pr2 are communicated with one another with the vertical hole 45 and the horizontal hole 47 disposed at the spool SP. Three recesses 60, 61, and 62 formed into annular grooves and axially arranged are disposed at the inner periphery of the housing H. Furthermore, the spring Cs1 interposed between the bottom portion inward the left end in FIG. 3 of the housing H and the spool SP, and the spool SP is biased to the right direction in FIG. 3 by this spring Cs1.

The solenoid Sol is mounted to the opening end at the right end of the housing H. A plunger pin 70 of the solenoid Sol abuts on the right end in FIG. 3 of the spool SP. The solenoid Sol includes a case 71 in the shape of a cylinder with a closed bottom, coils 72 and 73 axially arranged and housed in the case 71, a plunger 74 inserted through inner peripheries of the coils 72 and 73, and the plunger pin 70 joined to the plunger 74.

The spring Cs2 is interposed between the bottom portion of the case 71 and the plunger 74 of the solenoid Sol. The spring Cs2 biases the spool SP leftward in FIG. 3. With the electromagnetic throttle switching valve 9 thus configured, during the non-current application during which electric power is not supplied to the coils 72 and 73, the spool SP is biased from both ends by the springs Cs1 and Cs2 and is positioned at a neutral.

Supplying the current to the coil 72 suctions the plunger 74 to the left side in FIG. 3 in the solenoid Sol. This presses and moves the spool SP to the left side in FIG. 3 against the biasing force from the spring Cs1 by the suctioning force by the coil 72 and the biasing force from the spring Cs2. On the contrary, supplying the current to the coil 73 suctions the plunger 74 to the right side in FIG. 3. This presses and moves the spool SP to the right side in FIG. 3 against the biasing force from the spring Cs2 by the suctioning force by the coil 73 and the biasing force from the spring Cs1. Thus, supplying the current to the solenoid Sol ensures pressing the spool SP in both the right and left directions.

The housing H includes a port 63 connected to the extension-side passage 7 and corresponding to the A-port, a port 64 connected to the contraction-side passage 8 and corresponding to the B-port, a port 65 connected to the supply passage 5 and corresponding to the P-port, and ports 66 and 67 connected to the discharge passage 6 and corresponding to the T-port.

The port 63 has one end opening to the outer peripheral surface of the housing H and the other end communicating with the inner periphery of the housing H at between the recesses 60 and 61 at the left side and the center in FIG. 3. The port 64 has one end opening to the outer peripheral surface of the housing H and the other end communicating with the inner periphery of the housing H at between the recesses 61 and 62 at the center and the right side in FIG. 3. The port 65 has one end opening to the outer peripheral surface of the housing H and the other end communicating with the recess 61 at the center. The port 66 has one end opening to the outer peripheral surface of the housing H and the other end communicating with the recess 60 on the left side in FIG. 3. The port 67 branches from the port 66 and communicates with the recess 62 on the right side in FIG. 3. The horizontal hole 46 of the spool SP opens to an outer peripheral surface of the land 40 and faces the recess 60. This always communicates between the horizontal hole 46 of the spool SP and the reservoir R through the port 66. Accordingly, the chambers Pr1 and Pr2 disposed on both sides of the spool SP are always communicated with the reservoir R through the vertical hole 45 and the horizontal holes 46 and 47, making the pressures of the chambers Pr1 and Pr2 uniform. Thus, it is considered such that different pressures do not act on the end portions of the spool SP and the spool SP does not move by the force other than by the springs Cs1 and Cs2 and the thrust caused by the solenoid Sol.

The electromagnetic throttle switching valve 9 illustrated in FIG. 3 is configured as described above. FIG. 3 illustrates a state of the spool SP located at the neutral position N. During the non-current application during which the current is not supplied to the coils 72 and 73, the solenoid Sol does not produce the thrust and the spool SP is positioned at the neutral position N by the balance between the springs Cs1 and Cs2. The spool SP is formed such that the land 40 and the land 42 are slidably in contact with the inner periphery of the housing H even stroked at the maximum width; therefore, the chambers Pr1 and Pr2 do not communicate with the recesses 60, 61, and 62.

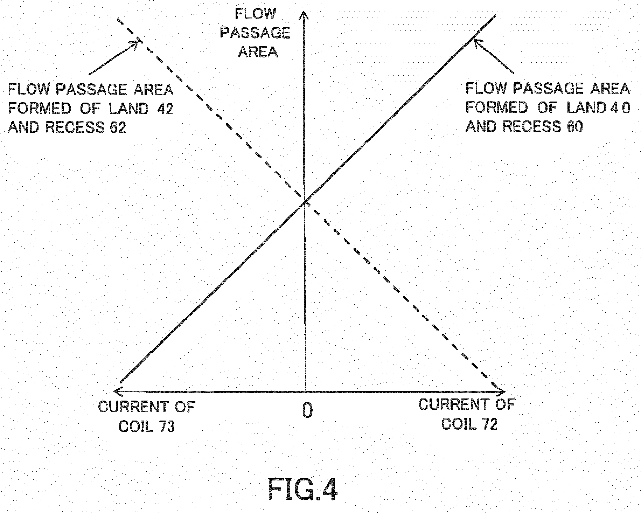

At the neutral position N, the land 41 is opposed to the recess 61 at the center. In this state, the recess 61 communicates with the recess 60 on the left side via the groove 43 and communicates with the recess 62 on the right side via the groove 44. Accordingly, the supply passage 5 connected to the recess 61 via the port 65, the discharge passage 6 connected to the recesses 60 and 62 via the ports 66 and 67, the extension-side passage 7 connected to the port 63 opposed to the groove 43, and the contraction-side passage 8 connected to the port 64 opposed to the groove 44 communicate with one another. Assuming that the current supplied to the coils 72 and 73 is 0, as illustrated in FIG. 4, the flow passage area formed of the land 40 and the recess 60 and the flow passage area formed of the land 42 and the recess 62 become equal and the pressure losses generated the areas also becomeequal. Accordingly, the pressure of the port 63 corresponding to the A-port opposed to the groove 43 and the pressure of the port 64 corresponding to the B-port opposed to the groove 44 become equal at the neutral position N. That is, the pressures at the coupling ends of the extension-side passage 7 and the contraction-side passage 8 to the electromagnetic throttle switching valve 9 becomeequal.

Supplying the current to the coil 73 of the solenoid Sol loses the balance of the forces, moves the spool SP rightward from the position illustrated in FIG. 3, and the electromagnetic throttle switching valve 9 transitions to the extension-side supply position X. The spool SP stops at the position at which the thrust from the solenoid Sol and the biasing force from the springs Cs1 and Cs2 are balanced. That is, a movement distance of the spool SP from the neutral to the right in FIG. 3 is settled by the amount of current supplied to the coil 73. The rightward movement of the spool SP in FIG. 3 reduces the flow passage area formed of the land 40 and the recess 60 and increases the pressure loss at the route heading for the discharge passage 6 from the extension-side passage 7. Additionally, the flow passage area formed of the land 42 and the recess 62 increases and the pressure loss at the route heading for the discharge passage 6 from the contraction-side passage 8 decreases. Consequently, the pressure of the extension-side passage 7 rises and the pressure of the contraction-side passage 8 lowers. As illustrated in FIG. 4, the larger an amount of applied current to the coil 73 is, the smaller the flow passage area formed of the land 40 and the recess 60 is, and the larger the flow passage area formed of the land 42 and the recess 62 is.

Meanwhile, supplying the current to the coil 72 of the solenoid Sol loses the balance of the forces, moves the spool SP leftward from the position illustrated in FIG. 3, and the electromagnetic throttle switching valve 9 transitions to the contraction-side supply position Y. The spool SP stops at the position at which the thrust from the solenoid Sol and the biasing force from the springs Cs1 and Cs2 are balanced. Accordingly, a movement distance of the spool SP from the neutral to the left in FIG. 3 is settled by the amount of current supplied to the coil 72. The leftward movement of the spool SP in FIG. 3 reduces the flow passage area formed of the land 42 and the recess 62 and increases the pressure loss at the route heading for the discharge passage 6 from the contraction-side passage 8. Additionally, the flow passage area formed of the land 40 and the recess 60 increases and the pressure loss at the route heading for the discharge passage 6 from the extension-side passage 7 decreases. Consequently, the pressure of the contraction-side passage 8 rises and the pressure of the extension-side passage 7 lowers. As illustrated in FIG. 4, the larger the amount of applied current to the coil 72 is, the larger the flow passage area formed of the land 40 and the recess 60 is, and the smaller the flow passage area formed of the land 42 and the recess 62 is.

Next, the following describes the control unit C.

As illustrated in FIG. 1, the control unit C includes a pressure sensor 20, a pressure sensor 21, an adder 23, and a solenoid driving circuit 24. The pressure sensor 20 detects a pressure Pa at the proximity of the electromagnetic throttle switching valve 9 in the extension-side passage 7. The pressure sensor 21 detects a pressure Pb at the proximity of the electromagnetic throttle switching valve 9 in the contraction-side passage 8. The adder 23 obtains a differential pressure ΔP between the pressure Pa and the pressure Pb detected by the pressure sensor 20 and the pressure sensor 21. The solenoid driving circuit 24 supplies the current to the solenoid Sol of the electromagnetic throttle switching valve 9. Since the control unit C includes the pressure sensors 20 and 21, the differential pressure between the extension-side passage 7 and the contraction-side passage 8 can be easily obtained.

The solenoid driving circuit 24 control the current supplied to the solenoid Sol such that the differential pressure ΔP input from the adder 23 becomes a target differential pressure P* input from an upper control device (not illustrated). Specifically, for example, the solenoid driving circuit 24 obtains the target current by performing proportional integral compensation or proportional integral derivative compensation on the deviation between the target differential pressure P* and the differential pressure ΔP, feeds back the amount of current flowing through the solenoid Sol, and controls the current flowing through the solenoid Sol so as to be the target current. It should be noted that while in this embodiment, the target differential pressure P* is input from the upper control device, the control device to obtain the target differential pressure P* may be integrated into the control unit C.

Next, the following describes the operations of the control unit C and the electromagnetic throttle switching valve 9.

During the non-current application during which the current is not applied to the coils 72 and 73 of the solenoid Sol, the spool SP is positioned at the position of the neutral position N as the neutral illustrated in FIG. 3 by the springs Cs1 and Cs2. In this state, a flow rate supplied from the pump 4 to the supply passage 5 and the port 65 is divided into a flow passing through the groove 43, the recess 60, the port 66, and the discharge passage 6 from the recess 61 and returning to the reservoir R and a flow passing through the groove 44, the recess 62, the port 67, and the discharge passage 6 from the recess 61 and returning to the reservoir R. The flow passage areas in the flow passages formed of the recess 60 and the land 40, the recess 61 and the land 41, and the recess 62 and the land 42 are equal, and the pressure losses generated at the passages are also equal. Therefore, the pressures Pa and Pb detected by the pressure sensors 20 and 21 become equal, and the differential pressure ΔP becomes 0. With the target differential pressure P* of 0, the differential pressure ΔP also becomes 0; therefore, the current is not applied to the coils 72 and 73 of the solenoid Sol, and the spool SP is maintained at the position of the neutral position N.

To produce the force in the direction of contracting the damper D, when the target differential pressure P* meeting (Pa - Pb) > 0 is input to the control unit C, the control unit C supplies the current to the coil 73 of the solenoid Sol according to the deviation between the target differential pressure P* and the differential pressure ΔP. Then, the spool SP moves rightward from the position illustrated in FIG. 3 according to the amount of applied current to the coil 73. This increases the flow passage area formed of the land 42 and the recess 62, decreases the pressure loss at the route heading for the discharge passage 6 from the contraction-side passage 8, reduces the flow passage area formed of the land 40 and the recess 60, and increases the pressure loss at the route heading for the discharge passage 6 from the extension-side passage 7. Consequently, the pressure of the extension-side passage 7 rises and the pressure of the contraction-side passage 8 lowers. Accordingly, the value of the differential pressure ΔP fed back to the solenoid driving circuit 24 approaches the target differential pressure P*, and the current application to the coil 73 is maintained at the current value at which the differential pressure ΔP matches the target differential pressure P*. Thus, the differential pressure ΔP is controlled so as to match the target differential pressure P*.

On the contrary, to produce the force in the direction of extending the damper D, when the target differential pressure P* meeting (Pa - Pb) < 0 is input to the control unit C, the control unit C supplies the current to the coil 72 of the solenoid Sol according to the deviation between the target differential pressure P* and the differential pressure ΔP. Then, the spool SP moves leftward from the position illustrated in FIG. 3 according to the amount of applied current to the coil 72. This reduces the flow passage area formed of the land 42 and the recess 62, increases the pressure loss at the route heading for the discharge passage 6 from the contraction-side passage 8, increases the flow passage area formed of the land 40 and the recess 60, and decreases the pressure loss at the route heading for the discharge passage 6 from the extension-side passage 7. Consequently, the pressure of the contraction-side passage 8 rises and the pressure of the extension-side passage 7 lowers. Accordingly, the value of the differential pressure ΔP fed back to the solenoid driving circuit 24 approaches the target differential pressure P*, and the current application to the coil 72 is maintained at the current value at which the differential pressure ΔP matches the target differential pressure P*. Thus, the differential pressure ΔP is controlled so as to match the target differential pressure P*.

Thus controlling the amount of current supplied to the solenoid Sol allows controlling the differential pressure between the pressure of the extension-side passage 7 and the pressure of the contraction-side passage 8. It should be noted that when the damper D receives the disturbance and extends/contracts, the liquid comes in and out the extension-side chamber R1 and the contraction-side chamber R2 of the damper D; therefore, the flow rate passing through the electromagnetic throttle switching valve 9 increases and decreases from the flow rate of the pump by the amount of flow rate caused by the extension/contraction of the damper D. Even if the flow rate thus increases and decreases by the extension/contraction of the damper D, the control unit C feeds back the differential pressure ΔP and controls the current provided to the solenoid Sol; therefore, the spool SP automatically moves and the differential pressure ΔP is controlled to be the target differential pressure P*.

The electromagnetic throttle switching valve 9 includes the three recesses 60, 61, and 62, which are axially arranged on the inner periphery of the tubular housing H, and the three lands 40, 41, and 42, which are axially arranged on the outer periphery and each opposed to the recesses 60, 61, and 62. The recess 61 at the center position is connected to the supply passage 5, the recesses 60 and 62 on both sides of the recess 61 are connected to the discharge passage 6, the extension-side passage 7 communicates with the inner periphery of the housing H at between the recess 61 at the center and the one adjacent recess 60, and the contraction-side passage 8 communicates with the inner periphery of the housing H at between the recess 61 at the center and the other adjacent recess 62. The electromagnetic throttle switching valve 9 thus configured can control the differential pressure between the extension-side passage 7 and the contraction-side passage 8 within a short stroke and is advantageous in that processing of the housing H and the spool SP is easy and further the stroke length of the solenoid Sol is set to be short.

It should be noted that the differential pressure between the pressure of the extension-side passage 7 and the pressure of the contraction-side passage 8 can be appropriately controlled when the pressure on the high pressure side is held higher than the reservoir pressure. In the case where the flow rate of the pump becomes insufficient or the pump 4 is in stop and therefore the liquid needs to be suppled from the reservoir R via the suction check valve 11, the differential pressure becomes 0.

The following describes the operations of the suspension device S configured as described above. First, the following describes the operations during normal in which the motor 13, the pump 4, and the electromagnetic throttle switching valve 9 normally behave.

Driving the pump 4 by the motor 13 and controlling the differential pressure between the extension-side chamber R1 and the contraction-side chamber R2 by the electromagnetic throttle switching valve 9 allow the damper D to function as an actuator to actively extend or contract. In the case where the thrust generated in the damper D is in the extension direction of the damper D, the electromagnetic throttle switching valve 9 is set to the contraction-side supply position Y to connect the contraction-side chamber R2 to the supply passage 5 and to connect the extension-side chamber R1 to the reservoir R. On the contrary, in the case where the thrust generated in the damper D is in the contraction direction of the damper D, the electromagnetic throttle switching valve 9 is set to the extension-side supply position X to connect the extension-side chamber R1 to the supply passage 5 and to connect the contraction-side chamber R2 to the reservoir R. Then, adjusting the differential pressure ΔP between the extension-side chamber R1 and the contraction-side chamber R2 by the electromagnetic throttle switching valve 9 can control the magnitude of the thrust in the extension direction or the contraction direction of the damper D.

It should be noted that the target differential pressure P*, for example, may be obtained as follows. Information with which a vibration state of the vehicle required for a control rule suitable for vibration reduction of the vehicle can be grasped, for example, vehicle information such as information on an acceleration and a speed of the sprung member BO and the unsprung member W in a vertical direction and information on an extension/contraction speed and extension/contraction acceleration of the damper D is used to find the thrust to be generated by the damper D in accordance with the control rule, and the target differential pressure P* is obtained from this thrust.

While the suspension device S includes a motor driving circuit 25 that drives the motor 13 driving the pump 4 at the control unit C, the motor driving circuit 25 may be disposed separately from the control unit C. Since the electromagnetic throttle switching valve 9 controls the thrust of the damper D, the pump 4 only needs to be rotatably driven by a constant rotation speed to drive the pump 4 by the motor 13.

The operations in the case where the damper D is actively extended/contracted have been described above. During vehicle running, the damper D receives disturbance by unevenness on a road surface and extends/contracts. The following describes the operations in the light of the extension/contraction of the damper D receiving the disturbance.

When the damper D receives the disturbance and extends/contracts, four cases are assumed by categorizing the cases by the direction that the damper D generates the thrust and the direction that the damper D extends/contracts. Defining the pressure at the A-port ***a*** as Pa and a pressure at the B-port ***b*** as Pb, the following describes the first case where the differential pressure is controlled so as to meet Pa > Pb, the suspension device S is caused to produce the thrust of pressing down the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port ***a*** of the electromagnetic throttle switching valve 9. Meanwhile, the extension of the damper D expands the volume of the contraction-side chamber R2 and the liquid is supplemented to the contraction-side chamber R2 from the pump 4 through the B-port ***b*** and the contraction-side check valve 18.

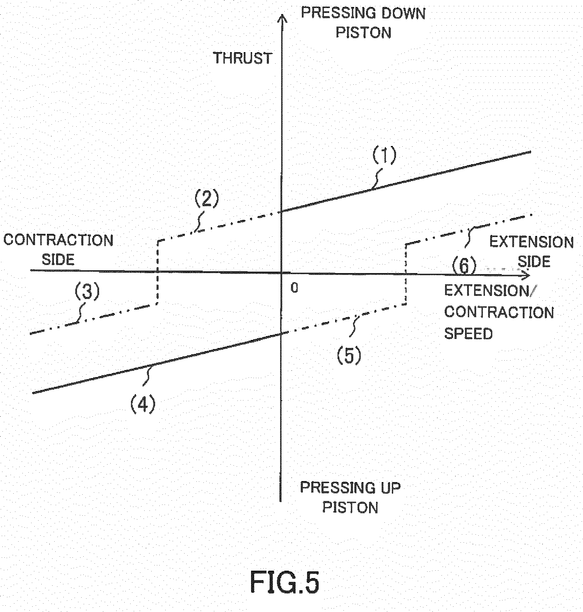

When the extension speed becomes fast and the flow rate of liquid to be supplemented to the contraction-side chamber R2 exceeds the flow rate of discharge of the pump 4, the liquid is also supplied from the reservoir R via the suction check valve 11. Since the electromagnetic throttle switching valve 9 holds the differential pressure between the pressure Pa at the A-port ***a*** and the pressure Pb at the B-port ***b*** constant, the pressure of the extension-side chamber R1 becomes higher than the pressure at the A-port ***a*** by the amount of pressure loss generated at the extension-side damping valve 15. Accordingly, the pressure of the extension-side chamber R1 becomes higher than that of the contraction-side chamber R2 by a value found by adding the pressure by the amount of pressure loss generated at the extension-side damping valve 15 to the differential pressure adjusted by the electromagnetic throttle switching valve 9, and the damper D produces the thrust to suppress the extension. The properties of the extension/contraction speed of the damper and the produced thrust at this time become the properties illustrated by a line (1) in FIG. 5. It should be noted that the graph illustrated in FIG. 5 indicates the thrust of the damper D on the vertical axis and indicates the extension/contraction speed of the damper D on the horizontal axis.

The following describes the second case where the differential pressure is controlled so as to meet Pa > Pb, the suspension device S is caused to produce the thrust of pressing down the piston 2, and the damper D performs the contraction operation by the external force. In this case, the contraction of the damper D reduces the volume of the contraction-side chamber R2 and the liquid discharged from the contraction-side chamber R2 passes through the contraction-side damping valve 17 and flows to the B-port ***b*** of the electromagnetic throttle switching valve 9. Meanwhile, the contraction of the damper D expands the volume of the extension-side chamber R1 and the liquid is supplemented to the extension-side chamber R1 from the pump 4 through the A-port ***a*** and the extension-side check valve 16. Since the electromagnetic throttle switching valve 9 holds the differential pressure between the pressure Pa at the A-port ***a*** and the pressure Pb at the B-port ***b*** constant, the pressure of the contraction-side chamber R2 becomes higher than the pressure at the B-port ***b*** by the amount of pressure loss generated at the contraction-side damping valve 17. Accordingly, the pressure of the extension-side chamber R1 becomes higher than that of the contraction-side chamber R2 by a value found by subtracting the pressure by the amount of pressure loss generated at the contraction-side damping valve 17 from the differential pressure adjusted by the electromagnetic throttle switching valve 9, and the damper D produces the thrust to assist the contraction. The properties of the extension/contraction speed of the damper and the produced thrust at this time become the properties illustrated by a line (2) in FIG. 5.

Furthermore, when the contraction speed becomes fast and the flow rate of liquid to be supplemented to the extension-side chamber R1 exceeds the flow rate of discharge of the pump 4, the liquid is also supplied from the reservoir R through the suction check valve 11. The A-port ***a*** cannot be pressurized by the flow rate of discharge of the pump 4 in such state, and the pressure Pa at the A-port ***a*** becomes slightly lower than the pressure of the reservoir R. In view of this, the electromagnetic throttle switching valve 9 cannot control the differential pressure between the pressure Pa at the A-port ***a*** and the pressure Pb at the B-port ***b*,** and the differential pressure between both becomes 0. Accordingly, the damper D produces the thrust by the differential pressure between the extension-side chamber R1 and the contraction-side chamber R2 generated by the pressure loss generated when the liquid discharged from the contraction-side chamber R2 passes through the contraction-side damping valve 17. The properties of the extension/contraction speed of the damper and the produced thrust at this time become the properties illustrated by a line (3) in FIG. 5. It should be noted that the property illustrated by the line (3) becomes discontinuous with the property illustrated by the line (2). Thus, when the flow rate of liquid to be supplemented to the extension-side chamber R1 exceeds the flow rate of discharge of the pump 4, the damper D functions as a passive damper and has the property where the thrust changes dependent on the contraction speed.

Next, the following describes the third case where the differential pressure is controlled so as to meet Pb > Pa, the suspension device S is caused to produce the thrust of pressing up the piston 2, and the damper D performs the contraction operation by the external force. In this case, the contraction of the damper D reduces the volume of the contraction-side chamber R2, the liquid discharged from the contraction-side chamber R2 passes through the contraction-side damping valve 17 and flows to the B-port ***b*** of the electromagnetic throttle switching valve 9. Meanwhile, the contraction of the damper D expands the volume of the extension-side chamber R1 and the liquid is supplemented to the extension-side chamber R1 from the pump 4 through the A-port ***a*** and the extension-side check valve 16.

When the contraction speed becomes fast and the flow rate of liquid to be supplemented to the extension-side chamber R1 exceeds the flow rate of discharge of the pump 4, the liquid is also supplied from the reservoir R via the suction check valve 11. Since the electromagnetic throttle switching valve 9 holds the differential pressure between the pressure Pa at the A-port a and the pressure Pb at the B-port ***b*** constant, the pressure of the contraction-side chamber R2 becomes higher than the pressure at the B-port ***b*** by the amount of pressure loss generated at the contraction-side damping valve 17. Accordingly, the pressure of the contraction-side chamber R2 becomes higher than that of the extension-side chamber R1 by a value found by adding the pressure by the amount of pressure loss generated at the contraction-side damping valve 17 to the differential pressure adjusted by the electromagnetic throttle switching valve 9, and the damper D produces the thrust to suppress the contraction. The properties of the extension/contraction speed of the damper and the produced thrust at this time become the properties illustrated by a line (4) in FIG. 5.

The following describes the fourth case where the differential pressure is controlled so as to meet Pb > Pa, the suspension device S is caused to produce the thrust of pressing up the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port ***a*** of the electromagnetic throttle switching valve 9. Meanwhile, the extension of the damper D expands the volume of the contraction-side chamber R2 and the liquid is supplemented to the contraction-side chamber R2 from the pump 4 through the B-port ***b*** and the contraction-side check valve 18. Since the electromagnetic throttle switching valve 9 holds the differential pressure between the pressure Pa at the A-port ***a*** and the pressure Pb at the B-port ***b*** constant, the pressure of the extension-side chamber R1 becomes higher than the pressure at the A-port ***a*** by the amount of pressure loss generated at the extension-side damping valve 15. Accordingly, the pressure of the contraction-side chamber R2 becomes higher than that of the extension-side chamber R1 by a value found by subtracting the pressure by the amount of pressure loss generated at the extension-side damping valve 15 from the differential pressure adjusted by the electromagnetic throttle switching valve 9, and the damper D produces the thrust to assist the extension. The properties of the extension/contraction speed of the damper and the produced thrust at this time become the properties illustrated by a line (5) in FIG. 5.

Furthermore, when the extension speed becomes fast and the flow rate of liquid to be supplemented to the contraction-side chamber R2 exceeds the flow rate of discharge of the pump 4, the liquid is also supplied from the reservoir R via the suction check valve 11. The B-port ***b*** cannot be pressurized by the flow rate of discharge of the pump 4 in such state, and the pressure Pb at the B-port ***b*** becomes slightly lower than the pressure of the reservoir R. Accusingly, the electromagnetic throttle switching valve 9 cannot control the differential pressure between the pressure Pa at the A-port ***a*** and the pressure Pb at the B-port ***b*,** and the differential pressure between both becomes 0. Then, the damper D produces the thrust by the differential pressure between the extension-side chamber R1 and the contraction-side chamber R2 generated by the pressure loss generated when the liquid discharged from the extension-side chamber R1 passes through the extension-side damping valve 15. The properties of the extension/contraction speed of the damper and the produced thrust at this time become the properties illustrated by a line (6) in FIG. 5. It should be noted that the property illustrated by the line (6) becomes discontinuous with the property illustrated by the line (5). Thus, when the flow rate of liquid to be supplemented to the contraction-side chamber R2 exceeds the flow rate of discharge of the pump 4, the damper D functions as the passive damper and has the property where the thrust changes dependent on the extension speed.

It should be noted that the damper D exhibits the property of changing the thrust from the line (2) to the line (3) in FIG. 5 on the contraction side and exhibits the property of changing the thrust from the line (5) to the line (6) in FIG. 5 on the extension side. The change in property occurs extremely instantaneously; therefore, an influence given to a ride comfort is slight.

As described above, controlling the differential pressure by the electromagnetic throttle switching valve 9 can configure the thrust of the damper D variable in a range between a line connecting the line (1) to the line (3) and a line connecting the line (4) to the line (6) in FIG. 5. In the case where the driving of the pump 4 supplies the flow rate of discharge of the pump 4 to the chamber to be enlarged among the extension-side chamber R1 and the contraction-side chamber R2, when the flow rate of discharge of the pump 4 is equal to or more than the amount of increased volume of the enlarged chamber, the damper D is caused to produce the thrust in a direction identical to the extension/contraction direction of the damper D.

Next, the following describes the operations of the suspension device S when the pump 4 is not driven (set to the stop state). In this case as well, four cases are assumed by categorizing the cases by the direction that the damper D receives the disturbance and extends/contracts and the direction that the damper D generates the thrust.

The following describes the first case where the differential pressure is controlled so as to meet Pa > Pb, the suspension device S is caused to produce the thrust of pressing down the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port ***a*** of the electromagnetic throttle switching valve 9. Meanwhile, the extension of the damper D expands the volume of the contraction-side chamber R2 and the liquid is supplemented to the contraction-side chamber R2 from the reservoir R through the B-port ***b*** and the contraction-side check valve 18.

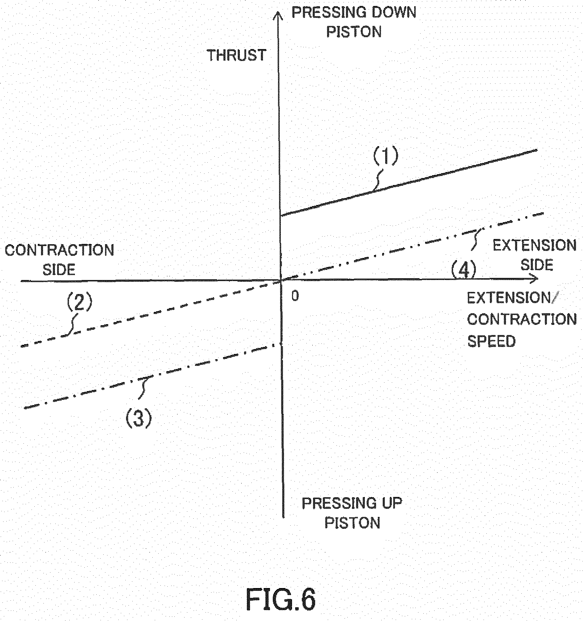

Since the electromagnetic throttle switching valve 9 holds the differential pressure between the pressure Pa at the A-port ***a*** and the pressure Pb at the B-port ***b*** constant, the pressure of the extension-side chamber R1 becomes higher than the pressure at the A-port ***a*** by the amount of pressure loss generated at the extension-side damping valve 15. Accordingly, the pressure of the extension-side chamber R1 becomes higher than that of the contraction-side chamber R2 by a value found by adding the pressure by the amount of pressure loss generated at the extension-side damping valve 15 to the differential pressure adjusted by the electromagnetic throttle switching valve 9, and the damper D produces the thrust to reduce the extension. The properties of the extension/contraction speed of the damper and the produced thrust at this time become the properties illustrated by a line (1) in FIG. 6. It should be noted that the graph illustrated in FIG. 6 indicates the thrust of the damper D on the vertical axis and indicates the extension/contraction speed of the damper D on the horizontal axis.

The following describes the second case where the differential pressure is controlled so as to meet Pa > Pb, the suspension device S is caused to produce the thrust of pressing down the piston 2, and the damper D performs the contraction operation by the external force. In this case, the contraction of the damper D reduces the volume of the contraction-side chamber R2 and the liquid discharged from the contraction-side chamber R2 passes through the contraction-side damping valve 17 and flows to the B-port ***b*** of the electromagnetic throttle switching valve 9. Meanwhile, the contraction of the damper D expands the volume of the extension-side chamber R1 and the liquid is supplemented to the extension-side chamber R1 from the reservoir R through the suction check valve 11, the A-port ***a***, and the extension-side check valve 16. The pressure Pa at the A-port ***a*** becomes slightly lower than the pressure of the reservoir R. Accordingly, the electromagnetic throttle switching valve 9 cannot control the differential pressure between the pressure Pa at the A-port ***a*** and the pressure Pb at the B-port ***b*,** and the differential pressure between both becomes 0. Then, the damper D produces the thrust by the differential pressure between the extension-side chamber R1 and the contraction-side chamber R2 generated by the pressure loss generated when the liquid discharged from the contraction-side chamber R2 passes through the contraction-side damping valve 17. The properties of the extension/contraction speed of the damper and the produced thrust at this time become the properties illustrated by a line (2) in FIG. 6.

Next, the following describes the third case where the differential pressure is controlled so as to meet Pb > Pa, the suspension device S is caused to produce the thrust of pressing up the piston 2, and the damper D performs the contraction operation by the external force. In this case, the contraction of the damper D reduces the volume of the contraction-side chamber R2 and the liquid discharged from the contraction-side chamber R2 passes through the contraction-side damping valve 17 and flows to the B-port ***b*** of the electromagnetic throttle switching valve 9. Meanwhile, the contraction of the damper D expands the volume of the extension-side chamber R1 and the liquid is supplemented to the extension-side chamber R1 from the reservoir R through the A-port ***a*** and the extension-side check valve 16.

Since the electromagnetic throttle switching valve 9 holds the differential pressure between the pressure Pa at the A-port ***a*** and the pressure Pb at the B-port ***b*** constant, the pressure of the contraction-side chamber R2 becomes higher than the pressure at the B-port ***b*** by the amount of pressure loss generated at the contraction-side damping valve 17. Accordingly, the pressure of the contraction-side chamber R2 becomes higher than that of the extension-side chamber R1 by a value found by adding the pressure by the amount of pressure loss generated at the contraction-side damping valve 17 to the differential pressure adjusted by the electromagnetic throttle switching valve 9, and the damper D produces the thrust to reduce the contraction. The properties of the extension/contraction speed of the damper and the produced thrust at this time become the properties illustrated by a line (3) in FIG. 6.

The following describes the fourth case where the pressure is controlled so as to meet Pb > Pa, the suspension device S is caused to produce the thrust of pressing up the piston 2, and the damper D performs the extension operation by the external force. In this case, the extension of the damper D reduces the volume of the extension-side chamber R1 and the liquid discharged from the extension-side chamber R1 passes through the extension-side damping valve 15 and flows to the A-port ***a*** of the electromagnetic throttle switching valve 9. Meanwhile, the extension of the damper D expands the volume of the contraction-side chamber R2 and the liquid is supplemented to the contraction-side chamber R2 from the reservoir R through the suction check valve 11, the B-port ***b*,** and the contraction-side check valve 18. The pressure Pb at the B-port ***b*** becomes slightly lower than the pressure of the reservoir R. The electromagnetic throttle switching valve 9 cannot control the differential pressure between the pressure Pa at the A-port ***a*** and the pressure Pb at the B-port ***b*,** and the differential pressure between both becomes 0. Accordingly, the damper D produces the thrust by the differential pressure between the extension-side chamber R1 and the contraction-side chamber R2 generated by the pressure loss generated when the liquid discharged from the extension-side chamber R1 passes through the extension-side damping valve 15. The properties of the extension/contraction speed of the damper and the produced thrust at this time become the properties illustrated by a line (4) in FIG. 6.

As described above, with the pump 4 in stop, controlling the differential pressure by the electromagnetic throttle switching valve 9 can make the thrust of the damper D variable in a range from the line (1) to the line (4) in a first quadrant and in a range from the line (3) to the line (2) in a third quadrant in FIG. 6.

With the pump 4 in stop, in the case where the suspension device S is caused to produce the thrust of pressing down the piston 2, when the damper D performs the contraction operation by the external force, the thrust of the damper D becomes the property illustrated by the line (2) in FIG. 6 regardless of the regulation of the differential pressure by the electromagnetic throttle switching valve 9. This brings an effect similar to controlling the contraction-side damping force to the lowest damping force in a damping force variable damper. Furthermore, with the pump 4 in stop, in the case where the suspension device S is caused to produce the thrust of pressing up the piston 2, when the damper D performs the extension operation by the external force, the thrust of the damper D becomes the property illustrated by the line (4) in FIG. 6 regardless of the regulation of the differential pressure by the electromagnetic throttle switching valve 9. This brings an effect similar to controlling the extension-side damping force to the lowest damping force in the damping force variable damper.

Here, in a semi-active suspension, the case where skyhook control is performed in accordance with a Karnopp rule using the damping force variable damper is considered. When the extension-side damping force (the force in the direction of pressing down the piston) is required, the damping force of the damping force variable damper is controlled so as to be the damping force at which the target thrust is obtained during the extension operation. While in the contraction operation, since the extension-side damping force is not obtained, the damping force is controlled such that the lowest damping force is produced to the contraction side. Meanwhile, when the contraction-side damping force (the force in the direction of pressing up the piston) is required, the damping force of the damping force variable damper is controlled so as to be the damping force at which the target thrust is obtained during the contraction operation. While in the extension operation, since the contraction-side damping force is not obtained, the damping force is controlled such that the lowest damping force is produced to the extension side. With the suspension device S, to cause the damper D to produce the thrust of pressing down the piston 2 with the pump 4 stopped, the thrust of the damper D is controlled in a range in which the thrust can be output by the electromagnetic throttle switching valve 9 during the extension and the damper D produces the lowest thrust during the contraction. On the contrary, with the suspension device S, to cause the damper D to produce the thrust of pressing up the piston 2 with the pump 4 stopped, the thrust of the damper D is controlled in a range in which the thrust can be output by the electromagnetic throttle switching valve 9 during the contraction and the damper D produces the lowest thrust during the extension. Accordingly, with the pump 4 stopped, the suspension device S of this embodiment can automatically produce the function identical to the semi-active suspension. Accordingly, even during the driving of the pump 4, when the flow rate of discharge of the pump 4 becomes less than the amount of increased volume of the extension-side chamber R1 or the contraction-side chamber R2 to be enlarged, the suspension device S automatically can function as the semi-active suspension.

Finally, the following describes the operation of the suspension device S in failure where the current application to the motor 13 and the electromagnetic throttle switching valve 9 of the suspension device S becomes incapable due to some sort of abnormally. Suh failure includes, for example, in addition to the case where the current application to the motor 13 and the electromagnetic throttle switching valve 9 becomes incapable, the case where the current application to the motor 13 and the electromagnetic throttle switching valve 9 is stopped due to abnormally of the control unit C, the solenoid driving circuit 24, and the motor driving circuit 25.

In the failure, the current application to the motor 13 and the electromagnetic throttle switching valve 9 is stopped or the current application becomes incapable. At this time, the pump 4 stops and the electromagnetic throttle switching valve 9 is biased by the springs Cs1 and Cs2 and takes the neutral position N.

While the damper D performs the extension operation by the external force in this state, the volume of the extension-side chamber R1 reduces; therefore, the fluid by the reduced amount is discharged from the extension-side chamber R1 through the extension-side damping valve 15. The liquid is supplemented from the extension-side chamber R1 and the reservoir R to the contraction-side chamber R2 whose volume is expanded.

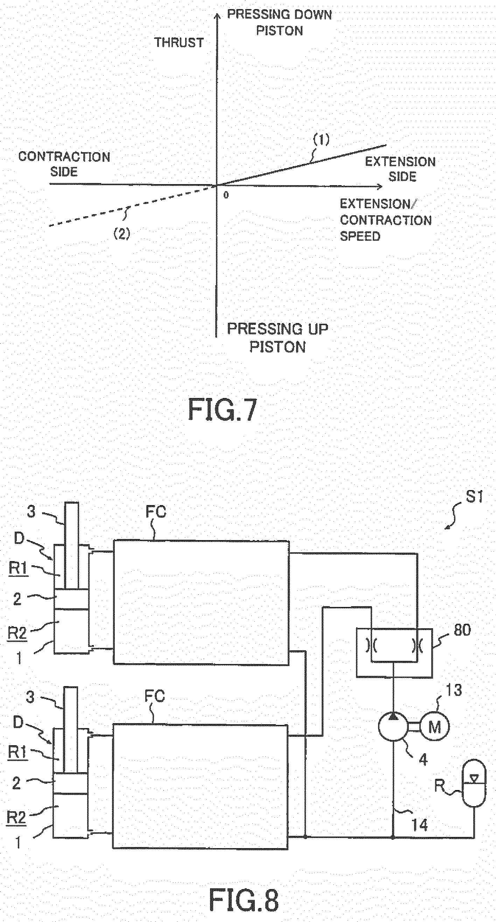

Accordingly, the pressure of the extension-side chamber R1 becomes higher than the pressure of the contraction-side chamber R2 by the amount of pressure loss generated when the fluid discharged from the extension-side chamber R1 passes through the extension-side damping valve 15 and the damper D produces the thrust by the differential pressure between the extension-side chamber R1 and the contraction-side chamber R2. The properties of the extension/contraction speed of the damper and the produced thrust at this time become the properties illustrated by a line (1) in FIG. 7.

On the contrary, in the case where the damper D performs the contraction operation by the external force, since the volume of the contraction-side chamber R2 reduces, the fluid by the reduced amount is discharged from the contraction-side chamber R2 through the contraction-side damping valve 17. The liquid is supplemented from the contraction-side chamber R2 and the reservoir R to the extension-side chamber R1 whose volume is expanded.

Accordingly, the pressure of the contraction-side chamber R2 becomes higher than the pressure of the extension-side chamber R1 by the amount of pressure loss generated when the fluid discharged from the contraction-side chamber R2 passes through the contraction-side damping valve 17 and the damper D produces the thrust by the differential pressure between the extension-side chamber R1 and the contraction-side chamber R2. The properties of the extension/contraction speed of the damper and the produced thrust at this time become the properties illustrated by a line (2) in FIG. 7.

Thus, in the case where the suspension device S is in failure, the damper D functions as the passive damper and reduces the vibrations of the sprung member BO and the unsprung member W; therefore, a fail-safe behavior is surely performed in the failure.

As described above, the suspension device S according to the embodiment can function as an active suspension that actively extends/contracts the damper D. Additionally, in the situation where the suspension device S is expected to produce the thrust as the semi-active suspension, the driving of the pump 4 is not essential and the pump 4 only needs to be driven as necessary, reducing energy consumption. Accordingly, the suspension device S according to this embodiment can function as the active suspension and also features small energy consumption.

With the suspension device S according to this embodiment, the thrust of the damper D can be controlled by only the electromagnetic throttle switching valve 9. Accordingly, compared with the conventional suspension device requiring the two solenoid valves, a cost for the entire device becomes inexpensive and routing of pipes of the fluid pressure circuit can also be simplified.

Furthermore, this suspension device S not only can function as the active suspension but also can perform the fail-safe behavior in the failure by only disposing the one electromagnetic throttle switching valve 9 to which the solenoid is mounted.

The suspension device S according to the embodiment includes the extension-side damping valve 15, the extension-side check valve 16, the contraction-side damping valve 17, and the contraction-side check valve 18. The extension-side damping valve 15 provides a resistance to the flow heading for the electromagnetic throttle switching valve 9 from the extension-side chamber R1. The extension-side check valve 16 is disposed in parallel with the extension-side damping valve 15 and allows only the flow heading for the extension-side chamber R1 from the electromagnetic throttle switching valve 9. The contraction-side damping valve 17 provides a resistance to the flow heading for the electromagnetic throttle switching valve 9 from the contraction-side chamber R2. The contraction-side check valve 18 is disposed in parallel with the contraction-side damping valve 17 and allows only the flow heading for the contraction-side chamber R2 from the electromagnetic throttle switching valve 9. Accordingly, to supply the fluid from the pump 4 to the extension-side chamber R1 or the contraction-side chamber R2, the fluid can be supplied to the extension-side chamber R1 or the contraction-side chamber R2 via the extension-side check valve 16 or the contraction-side check valve 18 of little resistance. This allows reducing a load of the pump 4 when the extension/contraction direction of the damper D matches the direction of the thrust to be generated. In the case where the fluid is discharged from the extension-side chamber R1 or the contraction-side chamber R2, the extension-side damping valve 15 or the contraction-side damping valve 17 provides the resistance to the flow of passing fluid, making it possible to obtain the large thrust by setting the differential pressure between the extension-side chamber R1 and the contraction-side chamber R2 to be equal to or more than the differential pressure settable by the electromagnetic throttle switching valve 9. Even when the thrust of the solenoid Sol in the electromagnetic throttle switching valve 9 is decreased, the suspension device S can generate the large thrust. Thus, the electromagnetic throttle switching valve 9 can be downsized and the cost can be further reduced. It should be noted that the extension-side damping valve 15 and the contraction-side damping valve 17 may provide the resistance to the flow of fluid regardless of the direction of the flow of fluid. As long as the extension-side damping valve 15 and the contraction-side damping valve 17 allow the bidirectional flow, the extension-side check valve 16 and the contraction-side check valve 18 can be omitted.

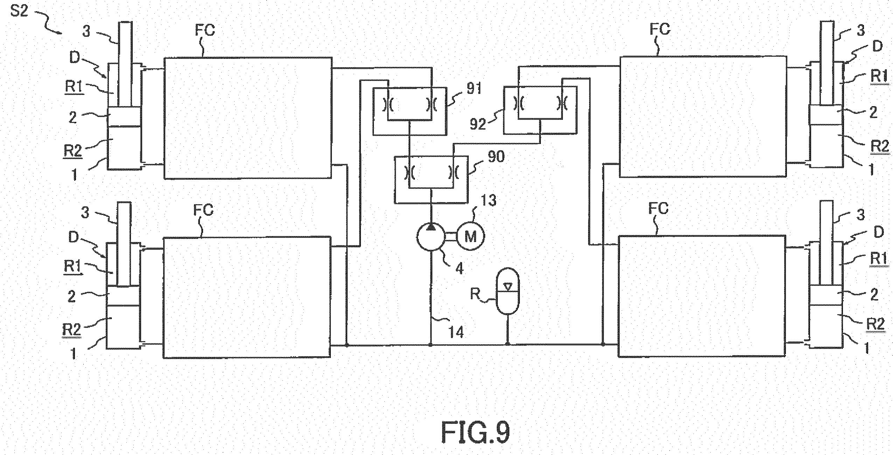

While the suspension device S is configured to drive the one damper D by the one pump 4, as illustrated in FIG. 8 and FIG. 9, the fluid pressure circuit FC is each disposed between the plurality of dampers D, the pump 4, and the reservoir R to ensure generating the thrusts of the plurality of dampers D with the one pump 4. Specifically, with a suspension device S1 according to a second embodiment illustrated in FIG. 8, to drive the two dampers D with the one pump 4, a flow dividing valve 80 is disposed between the pump 4 and the respective fluid pressure circuits FC to divide the fluid discharged by the pump 4 to each fluid pressure circuit FC by the flow dividing valve 80. While the flow dividing valve 80 equally divides the flow rate of discharge of the pump 4 and divides the fluid to the two fluid pressure circuits FC, the proportion may be changed and the fluid may be divided at the proportion.

With a suspension device S2 according to a third embodiment illustrated in FIG. 9, to drive the four dampers D with the one pump 4, three flow dividing valves 90, 91, and 92 are disposed between the pump 4 and the four fluid pressure circuits FC to divide the fluid discharged by the pump 4 to the four fluid pressure circuits FC by the flow dividing valves 90, 91, and 92. While the flow dividing valves 90, 91, and 92 equally divide the flow rate of discharge of the pump 4 and divide the fluid to the four fluid pressure circuits FC, the proportion may be changed and the fluid may be divided at the proportion.

Thus, dividing the flow rate of discharge from the pump 4 to the fluid pressure circuit FC disposed for each damper D using the flow dividing valves 80, 90, 91, and 92 ensures supplying the flow rate required to generate the thrust of each damper D by driving the one pump 4. Accordingly, the count of motors is enough to be one to generate the thrusts of the plurality of dampers D and the only one driving circuit is enough to drive the motor 13 in the control unit C, thereby ensuring reducing the cost as the entire system even if the count of dampers D increases.

The following describes the configurations, the actions, and the effects according to the embodiments of the present invention configured as described above as a whole.

The suspension device S, S1, or S2 includes the damper D, which includes the cylinder 1 and the piston 2, the pump 4, the reservoir R, which is connected to the suction side of the pump 4, and the fluid pressure circuit FC. The piston 2 is movably inserted into the cylinder 1 to partition the inside of the cylinder 1 into the extension-side chamber R1 and the contraction-side chamber R2. The fluid pressure circuit FC is disposed between the damper D, the pump 4, and the reservoir R. The fluid pressure circuit FC includes the supply passage 5 connected to the discharge side of the pump 4, the discharge passage 6 connected to the reservoir R, the extension-side passage 7 connected to the extension-side chamber R1, the contraction-side passage 8 connected to the contraction-side chamber R2, the extension-side damping valve 15 disposed in the extension-side passage 7, the contraction-side damping valve 17 disposed in the contraction-side passage 8, the electromagnetic throttle switching valve 9 disposed between the supply passage 5, the discharge passage 6, the extension-side passage 7, and the contraction-side passage 8, the supply-side check valve 12, which is disposed between the electromagnetic throttle switching valve 9 and the pump 4 in the supply passage 5 and is configured to allow only the flow heading for the electromagnetic throttle switching valve 9 side from the pump 4 side, the suction passage 10, which connects the discharge passage 6 to the supply passage 5 at a point between the electromagnetic throttle switching valve 9 and the supply-side check valve 12, and the suction check valve 11, which is disposed in the suction passage 10 and is configured to allow only the flow of fluid heading for the supply passage 5 from the discharge passage 6. The suspension device S, S1, or S2 further includes the control unit C that controls the electromagnetic throttle switching valve 9 based on the differential pressure between the extension-side passage 7 and the contraction-side passage 8.

This configuration allows the damper D to function as the active suspension and also the semi-active suspension by only the one electromagnetic throttle switching valve 9. Furthermore, in the situation where the production of the thrust is expected as the semi-active suspension, the driving of the pump 4 is not essential and the pump 4 only needs to be driven as necessary, reducing energy consumption. Furthermore, the thrust of the damper D can be controlled by only the electromagnetic throttle switching valve 9. Accordingly, compared with the conventional suspension device requiring the two solenoid valves, the cost for the entire device becomes inexpensive and also the routing of the pipes of the fluid pressure circuit can be simplified.

The suspension device S1 and S2 include the plurality of dampers D, the plurality of fluid pressure circuits FC disposed for the respective dampers D, and the flow dividing valves 80, 90, 91, and 92, which divide the fluid discharged from the pump 4 to the respective fluid pressure circuits FC.

This configuration divides the flow rate of discharge from the pump 4 to the fluid pressure circuit FC disposed for each damper D using the flow dividing valves 80, 90, 91, and 92, thereby ensuring supplying the flow rate required to generate the thrust of each damper D with the one pump 4. Accordingly, the count of motors to drive the pump 4 and the count of driving circuits to drive the motor 13 are enough to be one to generate the thrusts of the plurality of dampers D, thereby ensuring reducing the cost as the entire system even if the count of dampers increases.

With the suspension device S, S1, or S2, the electromagnetic throttle switching valve 9 includes the spool SP, the push-pull solenoid Sol, and the pair of springs Cs1 and Cs2. The spool SP is switched between the three positions, the extension-side supply position X where the extension-side passage 7 is connected to the supply passage 5 and the contraction-side passage 8 is connected to the discharge passage 6, the neutral position N where the extension-side passage 7, the contraction-side passage 8, the supply passage 5, and the discharge passage 6 communicate with one another, and the contraction-side supply position Y where the contraction-side passage 8 is connected to the supply passage 5 and the extension-side passage 7 is connected to the discharge passage 6. The solenoid Sol drives the spool SP. The pair of springs Cs1 and Cs2 bias the spool SP to position the spool SP at the neutral position N.

With this configuration, since the supply passage 5, the discharge passage 6, the extension-side passage 7, and the contraction-side passage 8 communicate with one another at the neutral position N, the fail-safe behavior is surely performed in the failure.

The suspension device S, S1 or S2 includes the extension-side check valve 16, which is disposed in the extension-side passage 7 in parallel with the extension-side damping valve 15 and is configured to allow only the flow heading for the extension-side chamber R1 from the electromagnetic throttle switching valve 9, and the contraction-side check valve 18, which is disposed in the contraction-side passage 8 in parallel with the contraction-side damping valve 17 and is configured to allow only the flow heading for the contraction-side chamber R2 from the electromagnetic throttle switching valve 9.

With this configuration, to supply the fluid from the pump 4 to the extension-side chamber R1 or the contraction-side chamber R2, the fluid can be supplied to the extension-side chamber R1 or the contraction-side chamber R2 via the extension-side check valve 16 or the contraction-side check valve 18 of little resistance. This allows reducing a load of the pump 4 when the extension/contraction direction of the damper D matches the direction of the thrust to be generated. In the case where the fluid is discharged from the extension-side chamber R1 or the contraction-side chamber R2, the extension-side damping valve 15 or the contraction-side damping valve 17 provides the resistance to the flow of passing fluid, making it possible to obtain the large thrust by setting the differential pressure between the extension-side chamber R1 and the contraction-side chamber R2 to be equal to or more than the differential pressure settable by the electromagnetic throttle switching valve 9. Even when the thrust of the solenoid Sol in the electromagnetic throttle switching valve 9 is decreased, the suspension device S, S1, or S2 can generate the large thrust. Thus, the electromagnetic throttle switching valve 9 can be downsized and the cost can be further reduced.

With the suspension device S, S1, or S2, the electromagnetic throttle switching valve 9 includes the tubular housing H, which includes the recesses 60, 61, and 62 formed of the three annular grooves axially arranged on the inner periphery, the spool Sp, which includes the three lands 40, 41, and 42 axially arranged on the outer periphery and each opposed to the recesses 60, 61, and 62 and is slidably inserted into the housing H, the pair of springs Cs1 and Cs2, which bias the spool SP from both sides, and the solenoid Sol joined to the spool SP and configured to produce the thrust to axially push the spool Sp. The recess 61 at the center position is connected to the supply passage 5. The recesses 60 and 62 on both sides of the recess 61 at the center position are connected to the discharge passage 6. The extension-side passage 7 communicates with the inner periphery of the housing H at between the recess 61 at the center position and one of the adjacent recesses (recess60). The contraction-side passage 8 communicates with the inner periphery of the housing H at between the recess 61 at the center position and other of the adjacent recesses (recess62).

This configuration can control the differential pressure between the extension-side passage 7 and the contraction-side passage 8 within the short stroke and is advantageous in that processing of the housing H and the spool SP is easy and further the stroke length of the solenoid Sol is set to be short.

With the suspension device S, S1, or S2, the control unit C includes the pressure sensor 20, which detects the pressure of the extension-side passage 7, and the pressure sensor 21, which detects the pressure of the contraction-side passage 8. The control unit C obtains the differential pressure between the extension-side passage 7 and the contraction-side passage 8.

This configuration ensures easily obtaining the differential pressure between the extension-side passage 7 and the contraction-side passage 8.

Embodiments of this invention were described above, but the above embodiments are merely examples of applications of this invention, and the technical scope of this invention is not limited to the specific constitutions of the above embodiments.

This application claims priority based on Japanese Patent Application No.2015-193145 filed with the Japan Patent Office on September 30, 2015, the entire contents of which are incorporated into this specification.

## Claims

1. A suspension device comprising:
a damper that includes a cylinder and a piston, the piston being movably inserted into the cylinder to partition an inside of the cylinder into an extension-side chamber and a contraction-side chamber;
a pump;
a reservoir connected to a suction side of the pump; and
a fluid pressure circuit disposed between the damper, the pump, and the reservoir, wherein
the fluid pressure circuit includes:
a supply passage connected to a discharge side of the pump;
a discharge passage connected to the reservoir;
an extension-side passage connected to the extension-side chamber;
a contraction-side passage connected to the contraction-side chamber;
an extension-side damping valve disposed in the extension-side passage;
a contraction-side damping valve disposed in the contraction-side passage;
an electromagnetic throttle switching valve disposed between the supply passage, the discharge passage, the extension-side passage, and the contraction-side passage;
a supply-side check valve disposed between the electromagnetic throttle switching valve and the pump in the supply passage, the supply-side check valve being configured to allow only a flow heading for the electromagnetic throttle switching valve side from the pump side;
a suction passage that connects the discharge passage to the supply passage at a point between the electromagnetic throttle switching valve and the supply-side check valve; and
a suction check valve disposed in the suction passage, the suction check valve being configured to allow only a flow of fluid heading for the supply passage from the discharge passage, and
the suspension device further includes a control unit, the control unit being configured to control the electromagnetic throttle switching valve on a basis of a differential pressure between the extension-side passage and the contraction-side passage.

2. The suspension device according to claim 1, comprising:
a plurality of the dampers;
a plurality of the fluid pressure circuits disposed at the respective dampers; and
a flow dividing valve that divides fluid discharged from the pump to each of the fluid pressure circuits.

3. The suspension device according to claim 1, wherein
the electromagnetic throttle switching valve includes:
a spool switched between three positions, the three positions being an extension-side supply position, a neutral position, and a contraction-side supply position, the extension-side supply position being a position at which the extension-side passage is connected to the supply passage and the contraction-side passage is connected to the discharge passage, the neutral position being a position at which the extension-side passage, the contraction-side passage, the supply passage, and the discharge passage communicate with one another, the contraction-side supply position being a position at which the contraction-side passage is connected to the supply passage and the extension-side passage is connected to the discharge passage;
a push-pull solenoid that drives the spool; and
a pair of springs that bias the spool to position the spool at the neutral position.

4. The suspension device according to claim 1, further comprising:
an extension-side check valve disposed in the extension-side passage in parallel with the extension-side damping valve, the extension-side check valve being configured to allow only a flow heading for the extension-side chamber from the electromagnetic throttle switching valve; and
a contraction-side check valve disposed in the contraction-side passage in parallel with the contraction-side damping valve, the contraction-side check valve being configured to allow only a flow heading for the contraction-side chamber from the electromagnetic throttle switching valve.

5. The suspension device according to claim 3, wherein:
the electromagnetic throttle switching valve includes:
a tubular housing that includes recesses formed of three annular grooves axially arranged on an inner periphery;
the spool that includes three lands axially arranged on an outer periphery and each opposed to the recesses, the spool being slidably inserted into the housing;
the pair of springs that bias the spool from both sides; and
the solenoid joined to the spool, the solenoid being configured to produce a thrust to axially push the spool,
the recess at a center position is connected to the supply passage,
the recesses on both sides of the recess at the center position are connected to the discharge passage,
the extension-side passage communicates with the inner periphery of the housing at between the recess at the center position and one of adjacent recesses, and
the contraction-side passage communicates with the inner periphery of the housing at between the recess at the center position and other of the adjacent recesses.

6. The suspension device according to claim 1, wherein:
the control unit includes:
a pressure sensor configured to detect the pressure of the extension-side passage; and
a pressure sensor configured to detect a pressure of the contraction-side passage, and
the control unit is configured to obtain the differential pressure between the extension-side passage and the contraction-side passage.
